# EUROPÄISCHE PATENTSCHRIFT

(11) **EP 2 543 446 B1**
(45) Veröffentlichungstag und Bekanntmachung des Hinweises auf die Patenterteilung: **12.06.2013**
(21) Anmeldenummer: 11007092.7
(22) Anmeldetag: 01.09.2011
(51) Int. Cl.: B07C 5/04, B65G 1/137, B65G 49/06

(54) **Scheibensortierer**
Panel sorter
Trieuse de vitres

(30) Priorität: 06.07.2011 DE 102011106780
(43) Veröffentlichungstag der Anmeldung: 09.01.2013
(73) Patentinhaber: Knaust, Klaus, 97616 Bad Neustadt (DE)
(72) Erfinder: Knaust, Klaus, 97616 Bad Neustadt (DE)
(74) Vertreter: Pöhner, Wilfried Anton

(56) Entgegenhaltungen:
- DE-A1-102008 024 407

## Beschreibung

Die Erfindung bezieht sich auf einen Scheibensortierer zum Zwischenlagern und Sortieren von Glasscheiben verschiedener Größe, bestehend aus einem Regal mit mehreren Regalfächern und einem oder mehreren Förderwagen, mittels derer jedes Regalfach und wenigsten eine Belade- und Entladestelle erreichbar ist und auf denen wenigstens je ein Horizontalförderer angeordnet ist und einer Steuerung, durch die die Bewegungen der Förderwagen und ihrer Horizontalförderer steuerbar sind und durch die jeder Glasscheibe ein Regalfach zuweisbar ist.

Die Größe von Glasscheiben in den Fenstern von Wohn- und Industriegebäuden ist auf aktuellem Stand der Technik für nahezu jeden Raum anders. Deshalb müssen Fertigungseinrichtungen so ausgelegt werden, dass praktisch jedes Fenster eine andere Größe hat.

Bei der Herstellung von Fenstern gehört zu den letzten Abschnitten einer größeren Produktion vor der Einrahmung von Glasscheiben das Zwischenlagern der Scheiben, um aus dem Zwischenlager die für das jeweilige Fenster benötigten Größen herausnehmen zu können.

Außerdem dient die Einlagerung in das Zwischenlager auch als eine Vorsortierung der Glasscheiben, indem alle Scheiben, die zu einem Fenster benötigt werden, nahe beieinander gelagert werden, um sie dann direkt nacheinander oder sogar gemeinsam zur Rahmung zu bringen.

Diese Fertigungsschritte werden bisher wegen der sehr geringen Stückzahl für eine bestimmte Größe fast ausschließlich manuell bewältigt, nur für das Herstellen der Rahmenverbindungen sind Vorrichtungen oder Teilautomaten bekannt. Dabei müssen Glasplatten für die Lagerung und den Transport bevorzugt hochkant positioniert werden.

Als aktuellen Stand der Technik stellt die EP 0 048 334 A1 eine Vorrichtung zum Sortieren von Glasscheiben vor, die in einer beliebigen Reihenfolge aus einer Glasschneideanlage kommen. Diese Sortiervorrichtung enthält ein Regal mit mehreren senkrechten Regalfächern entlang dessen ein Förderwagen verfahrbar ist, auf dem eine Glasscheibe von einer Belade- und/oder Entladestelle zu einem Regal gefahren und darin eingeschoben werden kan.

Ein Scheibensortierer nach dem Oberbegriff von Anspruch 1 ist aus DE-A-10 2008 024 407 bekannt.

Ein ganz wesentlicher Nachteil dieser Einrichtungen ist, dass sie in jedes Regalfach nur eine einzige Glasscheibe abstellt, wodurch in der Praxis zumeist die Hälfte des verfügbaren Lagerraums ungenutzt bleibt.

Nachteilig ist auch, dass dieser Förderwagen nicht dafür ausgestattet ist, die tatsächliche Größe der von ihm transportierten Scheibe zu überprüfen. Auch aus diesem Grunde kann ein derartiger Förderwagen bei der Einsortierung der Glasscheiben in das Regal nicht mit der gebotenen Sicherheit auf die tatsächliche Größe der Glasscheiben Bezug nehmen.

Auf diesem Hintergrund hat sich die Erfindung die Aufgabe gestellt, einen Scheibensortierer zu entwickeln, dessen Regalfächer in ihrer ganzen Tiefe zur Ablage von Glasscheiben möglichst voll ausgenutzt werden können.

Als Lösung lehrt die Erfindung, dass von der Steuerung Abmessungssensoren zur Erfassung von Breite und Höhe der Glasscheiben auswertbar sind und innerhalb jedes Regalfaches die Tiefe vorgebbar ist, in die eine Glasscheibe von einem Horizontalförderer verfahrbar ist und in der Steuerung für jede Glasscheibe im Regal deren Breite und deren Höhe und das jeweilige Regalfach und die jeweilige Position innerhalb dieses Regalfaches speicherbar und abrufbar ist und für jedes bereits mit wenigstens einer Glasscheibe belegte Regalfach aus der Differenz zur gesamten Regaltiefe die noch freie Regaltiefe berechenbar ist und von der Steuerung einer Glasscheibe mit gleicher oder geringerer Breite der noch freie Teil eines bereits teilweise belegten Regalfaches zuweisbar ist.

Das wichtigste Merkmal der Erfindung ist, dass in jedes Regalfach nicht nur eine einzige Glasscheibe sondern auch wenigstens zwei oder mehr kleinere Glasscheiben hinein gelegt werden können. Bisher wurde die Tiefe der Regalfächer auf die größte eingeplante Glasscheibe abgestimmt. Wenn die eingelagerte Scheibe jedoch kürzer war, dann blieb der von ihr frei gelassene Platz im Regal ungenutzt. Ein erfindungsgemäßer Scheibensortierer ermöglicht es jedoch, zu einer ersten, relativ kurzen Scheibe wenigstens eine zweite oder sogar noch eine dritte, oder mehr ebenfalls kurze Scheiben mit in das jeweilige Regalfach zu stellen. Dadurch wird die Regalfläche viel besser ausgenutzt als bei Bestückung mit nur einer einzigen Scheibe.

In der Praxis erstreckt sich das Spektrum der zu lagernden Glasscheiben von der längsten Glasscheibe bis herunter zu Glasscheiben, die vielleicht nur 10 % oder gar nur 5 % der Länge der größten Scheiben aufweisen. Mit einiger Wahrscheinlichkeit wird über eine längere Nutzungsdauer hinweg die Länge der meisten Scheiben etwa in der Mitte zwischen der kürzesten und der längsten Scheibe liegen. Auch wenn alle Regalfächer bestückt sind, aber nur mit jeweils einer Scheibe, bleibt im Mittel knapp die Hälfte des insgesamt verfügbaren Abstellraumes ungenutzt.

Dieser ungenutzte Raum erhöht nicht nur die Kosten für das Regal, sondern auch seinen Platzbedarf. Zusätzlich verlängert es den Anfahrweg für den oder die Förderwagen. Im Vergleich zu einem voll ausgenutzten Lager wird entweder ein entsprechend leistungsfähigerer Fahrantrieb benötigt oder die mindestens mögliche Taktzeit für das Ablegen einer Scheibe in den Scheibensortierer muss schmerzhaft verlängert oder die Anzahl der Förderwagen muss erhöht werden.

Der erfindungsgemäße Scheibensortierer ermöglicht hingegen, dass mehrere kleine Scheiben hintereinander in einem Regalfach abgelegt werden. Dafür wird eine Steuerung benötigt, in deren Datenspeicher die Breite sämtlicher Glasscheiben im Regal enthalten ist sowie das jeweilige Regalfach und die jeweilige Position in der Tiefe dieses Regalfaches, wozu auch die Position der vordersten Kante aller bereits in einem Fach abgelegten Glasscheiben zählt.

Aus der Differenz zwischen der Gesamttiefe des Regalfaches und der Position der vordersten Kante berechnet die Steuerung die noch freie Regaltiefe. So kann sie jeder neuen Scheibe, deren Breite gleich oder geringer als die noch freie Regaltiefe eines Regalfaches ist, diesen noch freien Platz zuweisen. Auf diese Weise kann in ein Regalfach, das bereits mit wenigstens einer Glasscheibe belegt ist, noch eine weitere Glasscheibe eingestellt werden.

Für jede zwischengelagerte Scheibe werden im Datenspeicher der Steuerung deren Bezeichnung, die Bezeichnung des Regalfaches und die Angabe über die Tiefe innerhalb des Regals eingelesen. Wenn eine Scheibe mit einer bestimmten Abmessung angefordert wird, die im Speicher der Steuerung hinterlegt ist, kann die Steuerung sofort die "richtige" Scheibe selektieren und mittels eines Förderwagens und dessen Horizontalförderers aus dem jeweiligen Regalfach entnehmen, und mit dem Förderwagen zur Entladestelle bringen, von wo aus der nächste Arbeitsschritt für das spätere Fenster folgt.

Dabei ist im einfachsten Fall in der Steuerung abgespeichert, in welche Tiefe innerhalb des Regalfaches eine gewünschte Scheibe hingefahren worden ist. Um diese Scheibe wieder aufzunehmen, kann deshalb im einfachsten Fall davon ausgegangen werden, dass die gewünschte Scheibe auch tatsächlich in dieser Position steht.

Für den Fall, dass sich Glasscheiben jedoch mitunter gegenüber den Förderbändern im Horizontalförderer und/oder den Regalförderbändern verschieben können, ist es jedoch sinnvoll, dass von der Steuerung die tatsächlich freie, noch verfügbare Tiefe eines jeden Regalfaches durch einen Tiefensensor auf dem Förderwagen erfassbar ist.

Sollten sich dann einmal Glasscheiben gegenüber den Förderbändern verschoben haben, so ist die Auswirkung dieser Verschiebung durch die Messung der tatsächlichen Position mit dem Tiefensensor korrigierbar.

Wenn die Höhe und die Breite einer Scheibe bekannt sind, so kann die Messung des Tiefensensors auch genutzt werden, um festzustellen, ob die Scheibe waagerecht oder senkrecht aufgestellt wurde.

Um beim Entnehmen die "richtige" Glasscheibe, also eine Glasscheibe mit der gewünschten Breite und Höhe auszuwählen, muss die Steuerung die Werte für diese Abmessungen abspeichern, was natürlich nur dann möglich ist, wenn sie auch korrekt erfasst werden. Als die in der Praxis wohl zuverlässigste Methode schlägt die Erfindung vor, dass die Abmessungssensoren für Höhe und Breite diese Maße mit einer entsprechenden Messtechnik erfassen. Dafür sind z.B. Lichtvorhänge geeignet, die senkrecht zur Oberfläche der Scheiben ausgerichtet sind. Oder die Glasscheibe wird auf einem Förderband an einem Sensor vorbeigefahren, der zuerst die Vorderkante der Scheibe erfasst und dann die rückwärtige Kante und daraus die Länge ermittelt. Alternativ können auch Messtaster an die Scheibe herangefahren werden.

Eine andere, indirekte Methode der Erfassung von Höhe und Breite jeder Glasscheibe ist, dass die Abmessungssensoren ein auf jeder Glasscheibe angebrachtes Informationsfeld, wie z.B. einen Barcode, welcher diese Informationen enthält, auslesen. Diese Methode ist natürlich nur insoweit zuverlässig, wie dieses Informationsfeld tatsächlich vorhanden ist und insoweit die darauf angegebenen Informationen auch korrekt sind.

Um das wesentliche Merkmal der Erfindung, nämlich die Lagerung von mehreren Glasscheiben hintereinander in einem einzigen Regalfach, zu verwirklichen, muss die Mechanik des Horizontalförderers bis in die hinterste Tiefe des Regalfachs hineinreichen.

Dafür sind zwei voneinander verschiedene Varianten möglich: In einer Variante besteht der Horizontalförderer aus einer einzigen Baugruppe, die bis in die hinterste Tiefe des Regals reicht.

In einer zweiten Ausführungsform ist der Horizontalförderer zweiteilig aufgebaut. Der erste Teil des Horizontalförderers ist auf dem Förderwagen angeordnet, der zweite Teil des Horizontalförderers ist in die Ablagefläche jedes Regalfaches integriert und wird bei Bedarf mit dem ersten Teil auf dem Förderwagen mechanisch oder elektrisch gekuppelt.

In einer interessanten Ausführungsvariante besteht der Horizontalförderer aus Förderbändern, von denen eines auf dem Förderwagen angeordnet ist und in Richtung der Regalfächer ausgerichtet ist. Dieses Förderband ist mit je einem weiteren Förderband mechanisch kuppelbar, das auf der Ablagefläche jedes Regalfaches angeordnet ist. Wenn ein Förderwagen vor ein Regalfach fährt, so stehen sich die beiden Enden des Förderbandes auf dem Transportwagen und des Förderbandes im Regalfach direkt einander gegenüber. Sie werden dann mechanisch miteinander verkuppelt, sodass das Förderband auf dem Förderwagen das Förderband im jeweiligen Regal mit bewegt. Auf diesen Förderbändern stehen hochkant die Glasscheiben und werden dabei von seitlichen Führungen am Umkippen gehindert.

Alternativ kann das zweite Förderband auf der Ablagefläche eines Regalfaches auch einen eigenen, elektrischen Antrieb besitzen. Während der Übergabe einer Glasscheibe vom ersten zum zweiten Förderband müssen dann beide Antriebe regelungstechnisch miteinander gekoppelt werden.

Das Zwischenlagern läuft wie folgt ab: Eine Glasscheibe wird an der Beladestation auf den Horizontalförderer eines Förderwagens aufgeladen und fährt damit an der Regalfront entlang bis zu demjenigen Regalfach, das die Steuerung für diese Scheibe ausgewählt hat. Wenn der Horizontalförderer genau mittig vor diesem Regalfach positioniert ist, schiebt er die Glasscheibe in das Regalfach hinein, und zwar genau auf die vorgegebene Tiefe. Dabei kann das Regalförderband innerhalb des Regalfaches mit dem Antrieb des Horizontalförderers verkuppelt werden.

Zum Absetzen der Scheibe wird das zweite Förderband im Regal von dem ersten Förderband des Horizontalförderers auf dem Förderwagen abgekuppelt, denn die darauf stehende Glasscheibe ist jetzt in ihrer Zwischenlagerposition angelangt und muss nicht mehr weiter bewegt werden.

Es ist ein wesentliches Merkmal der Erfindung, dass auf diese Weise auf dem zweiten Förderband auch mehrere Glasscheiben hintereinander abgestellt werden können.

Wenn jede Glasscheibe nur auf den Förderbändern aufliegt und nicht weiter abgestützt wird, sollte der Querantrieb, der die beiden Förderbänder bewegt, sanft anlaufen und sanft bremsen, damit auch schmale, hochkant stehende Scheiben nicht umfallen oder auf dem Förderband verrutschen.

Aus diesem Grund ist in einer weiter verfeinerten Ausführungsvariante die Beschleunigung des Querantriebes für die beiden Förderbänder regelbar. Bei dieser Ausstattung ist es sinnvoll, dass die Steuerung das Verhältnis von Höhe und Breite der jeweils zu fördernden Glasscheibe berechnet. Mit diesem Wert kann dann aus einer in der Steuerung gespeicherten Tabelle der für dieses Höhen-Breiten-Verhältnis maximal zulässige Beschleunigungswert entnommen werden und dem Querantrieb als obere Grenze vorgegeben werden. Für Glasscheiben, deren auf dem Förderband aufliegende Kante sehr viel länger ist, als die andere, senkrecht zum Förderband verlaufende Kante, kann auf diese Weise eine relativ hohe Beschleunigung zugelassen werden.

Für Glasscheiben, die mit ihrer kurzen Kante auf dem Förderband aufstehen und deren längere Kante senkrecht zum Förderband verläuft, wird damit verhindert, dass sie während des Transportes umkippen.

Wenn die Glasscheiben während des Transportes auf den Förderbändern eingespannt werden, sind höhere Beschleunigungen möglich, ohne dass schmale, hochkant stehende Scheiben umfallen oder auf dem Förderband verrutschen. Dann ist auch die Verwendung von ungeregelten Antrieben unkritisch.

In einer sehr interessanten Ausführungsform sind im Regal wenigstens zwei Regalfächer übereinander angeordnet. Das Regal kann also ganz oder teilweise "doppelstöckig" oder sogar "mehrstöckig" sein. Insbesondere dann, wenn eine Abmessung der größten Scheiben ein mehrfaches Vielfaches der kleinsten Scheiben ist, ist es sinnvoll, für die kleinen Scheiben auch "kleine" Regalfächer vorzusehen. Wenn diese kleinen Regalfächer übereinander anstatt nebeneinander angeordnet sind, ist das Regal teilweise mehrstöckig.

Es kann jedoch auch sinnvoll sein, das gesamte Regal mehrstöckig auszulegen, z.B. in einer einstöckigen Werkshalle mit einer großzügig bemessenen Raumhöhe. Dabei können die Grundflächen der einzelnen "Stockwerke" des Regals über alle Fächer hinweg durchgehen. Dann gibt es z.B. ein Stockwerk mit hohen Regalfächern und ein anderes mit niedrigeren Regalfächern.

Alternativ können die Höhen von jeweils übereinander angeordneten Regalfächern mit gleicher Breite jedoch auch von den Höhen der benachbarten Regalfächer abweichen.
Damit werden nicht nur an der Grundfläche sondern auch am gesamten Bauvolumen des Regals erfreuliche Einsparungen erreicht.

In jedem Fall eines zumindest teilweise mehrstöckigen Regals muss wenigstens ein Förderwagen eine Hubeinrichtung zum Anheben der Glasscheiben aufweisen.

Das kann z.B. ein Greifer sein, der wenigstens eine Glasscheibe anhebt, bis sie die Höhe des jeweiligen Regalfaches erreicht. Dann muss die Glasscheibe in das Regalfach hinein gefördert werden, was z.B. der Greifer als zusätzliche Funktion mit übernehmen kann. Es ist jedoch auch denkbar, dass aus dem Regalfach eine Aufnahmeeinrichtung herausgefahren wird und die Glasscheibe aufnimmt.

In einer vorteilhaften Variante wird durch die Hubeinrichtung der gesamte Horizontalförderer mit den darauf befindlichen Glasscheiben angehoben. Dann wird die Glasscheibe mit dem auch für eine einstöckige Regalversion geeigneten Mechanismus in ein Regalfach hinein geschoben.

Wenn dieser Mechanismus ein Förderband im Horizontalförderer ist, so wird dieses als Ganzes auf die Höhe des Regalförderbandes des jeweiligen Regalfaches angehoben.

Bei jeder Ausführung eines vorgenannten mehrstöckigen Regals müssen in der Steuerung für jedes Regalfach zwei Parameter abgespeichert und abrufbar sein, die sich auf die Höhe beziehen, nämlich die jeweilige Höhe des Innenraumes dieses Regalfaches und die jeweilige Höhe der Abstellfläche in diesem Regalfach in Bezug auf die Verfahrebene der Förderwagen. Sie werden benötigt, um die Hubeinrichtung des Förderwagens korrekt anzusteuern.

Es ist eines der wesentlichen Funktionen eines erfindungsgemäßen Scheibensortierers, dass alle für ein Fenster benötigten Glasscheiben möglichst in einem einzigen Regalfach gesammelt werden. Falls die Anzahl und/oder die Größe der Glasscheiben eines Fensters mehr als ein Regalfach erfordern, so sollten in all diesen Regalfächern möglichst keine anderen Glasscheiben gelagert werden, die für andere Fenster vorgesehen sind.

Deshalb sollte die Auswahl des Regalfaches durch die Steuerung mit der folgenden Priorität ablaufen: Jede Glasscheibe wird vorrangig einem solchen Regalfach zugewiesen, in dem sich bereits wenigstens eine andere Glasscheibe befindet, die demselben Fenster zugeordnet ist.

Nur falls das nicht möglich ist, wird die Glasscheibe in ein leeres Fach platziert, in welches dann nur solche Glasscheiben platziert werden sollten, die für das gleiche Fenster benötigt werden.

Falls das jedoch nicht machbar ist, wird eine neu in das Regal zu platzierende Glasscheibe in ein anderes Regalfach eingeordnet, in dem sich bereits eine Glasscheibe befindet, die einem anderen Fenster zugeordnet ist.

In einen erfindungsgemäßen Scheibensortierer werden alle Glasscheiben dadurch sortiert, dass sie in ein bestimmtes Regalfach platziert werden. Die Kriterien für diese Sortierung sind in der Steuerung gespeichert und bestimmen den Ablauf der Bewegungen. Jede Glasscheibe wird dann in einem zweiten Schritt wieder aus dem Scheibensortierer entnommen und zum nächsten Bearbeitungsschritt - z.B. zum Rahmen - verfahren.

Für diese Entnahme schlägt die Erfindung mehrere, verschiedene Abläufe vor:
Für den Fall, dass sich alle benötigten Glasscheiben in einem einzigen Regalfach befinden, verfährt die Steuerung einen Förderwagen mitsamt dem darauf angeordneten Horizontalförderer bis zu diesem Regalfach. Der Horizontförderer entleert das Regalfach vollständig und wird dann vom Förderwagen in die Abnahmeposition verfahren.
Für den Fall, dass die für ein Fenster benötigten Glasscheiben in mehr als einem Regalfach stehen, fährt ein Förderwagen diese Regalfächer nacheinander an. Bei jedem Regalfach nimmt sein Horizontalförderer die im jeweiligen Regalfach lagernden Glasscheiben auf. Sobald er alle zu einem Fenster erforderlichen Glasscheiben gesammelt hat oder wenn die Aufnahmefähigkeit des Horizontalförderers erschöpft ist, fährt der Förderwagen die Glasscheiben zur Abnahme.
Für den Fall, dass die für ein Fenster benötigten Glasscheiben "hinten" in einem oder mehreren Regalfächern "hinter anderen", nicht dazu gehörenden Glasscheiben stehen, muss die Steuerung einen Förderwagen so dirigieren, dass der Horizontalförderer zuerst die "vorne" in den Regalfächern stehenden Glasscheiben abtransportiert und in einem anderen, möglichst freien Regalfach sammelt. Erst dann fährt er oder ein weiterer Förderwagen zu den Regalfächern mit den eigentlich gewünschten Glasscheiben, lädt diese auf und verbringt sie zur Abnahmeposition.

Als Alternative zum automatischen Entnehmen der jeweils benötigten Glasscheiben ist auch ein manuelles Verfahren möglich. Dazu muss die Steuerung durch ein Display ergänzt werden, mit dem die Steuerung Botschaften an eine Person richten kann, die die Glasscheiben händisch aus den Regalfächern entnehmen soll. Dazu wird angezeigt, welche Glasscheibe aus welchem Regalfach als nächste zu entnehmen ist und dazu aufgefordert, diese Entnahme zu quittieren. Nach der Quittierung dieser Meldung teilt die Steuerung über das Display mit, welche Glasscheibe als nächste zu entnehmen ist. Dieser Ablauf wird solange fortgesetzt, bis keine weitere Glasscheibe mehr für dieses Fenster erforderlich ist, was ebenfalls auf dem Display angezeigt wird.

Im Folgenden sollen weitere Einzelheiten und Merkmale der Erfindung anhand eines Beispiels näher erläutert werden. Dieses soll die Erfindung jedoch nicht einschränken, sondern nur erläutern. Es zeigt in schematischer Darstellung:
- Figur 1: Aufsicht auf einen Scheibensortierer
- Figur 2: Perspektivische Ansicht eines Scheibenförderers ähnlich zu Figur 1, jedoch mit spiegelsymmetrischem Horizontalförderer

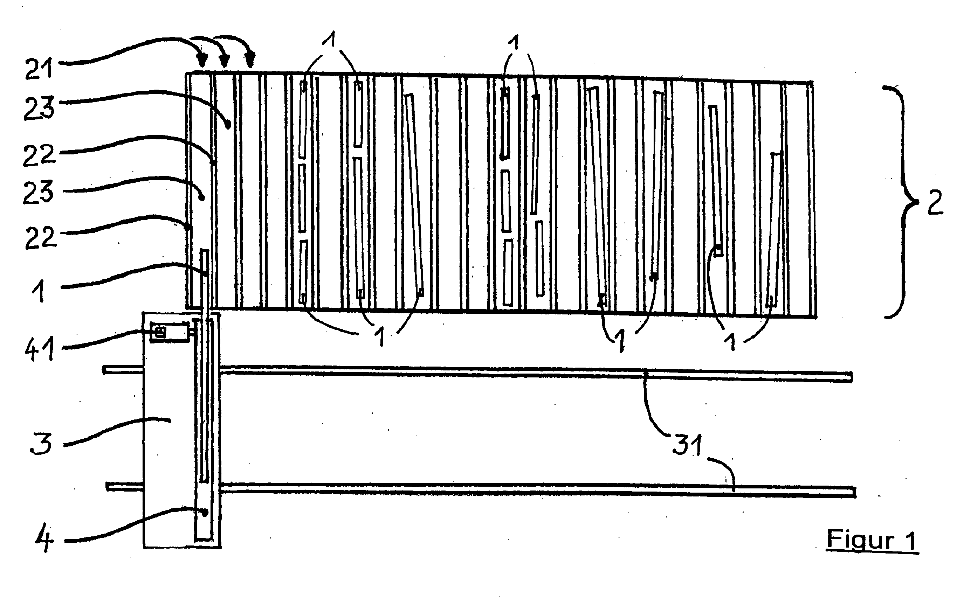

**Figur 1** zeigt einen erfindungsgemäßen Scheibensortierer in der Aufsicht. In der oberen Hälfte ist das Regal 2 eingezeichnet. Es besteht aus zahlreichen Regalfächern 21, die durch Seitenwände 22 voneinander getrennt werden, die in Figur 1 senkrecht auf den Betrachter zu weisen. In einigen der Regalfächer 21 sind bereits Glasscheiben 1 gelagert. Zwei Regalfächer 21 enthalten drei Stück kleine Glasscheiben 1 hintereinander und zwei Stück Regalfächer 21 enthalten jeweils zwei Stück Glasscheiben 1 hintereinander.

Vor der Front des Regals 2 sind zwei parallel zueinander laufende Schienen 31 verlegt. Auf diesen Schienen fährt ein Förderwagen 3, der durch einen - in Figur 1 nicht gezeichneten - Antrieb bewegt wird und von der - in Figur 1 ebenfalls nicht eingezeichneten - Steuerung angesteuert wird.
Auf dem Förderwagen 3 ist quer zur Richtung der Schienen 31 ein Horizontalförderer 4 angeordnet, der die Glasscheiben 1 vom Förderwagen 3 in ein Regalfach 21 hinein bewegt oder sie daraus entnimmt. Dabei wird er durch den Querantrieb 41 angetrieben, der von der nicht gezeichneten Steuerung kontrolliert und geregelt ist.

In Figur 1 sind Förderwagen 3 und Horizontalförderer 4 in einem Betriebszustand gezeigt, in dem aus dem ganz linken Regalfach 21 eine Glasscheibe 1 zugeführt oder entnommen wird:

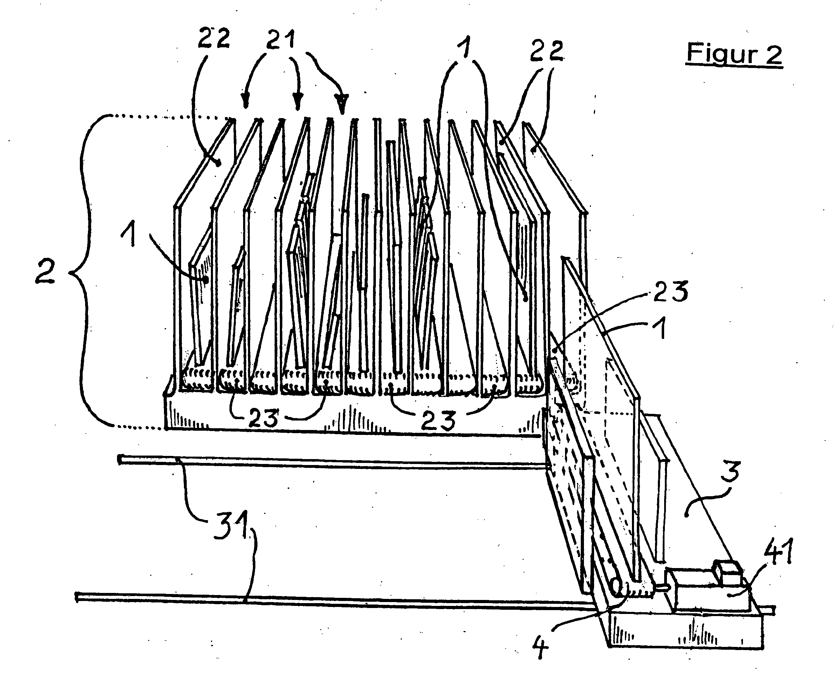

In **Figur 2** ist ein zu Figur 1 fast gleicher, erfindungsgemäßer Scheibensortierer perspektivisch dargestellt. Im Hintergrund ist das Regal 2 zu sehen, dessen Regalfächer 21 durch die senkrecht aufragenden Seitenwände 22 gebildet werden. Auf dem Boden eines jeden Regalfaches 21 ist ein Regalförderband 23 angeordnet, das über zwei Umlenkrollen gespannt ist, die an den Kanten jedes Regalfaches 21 angeordnet sind.

Deshalb sind in Figur 2 nur die Vorderkanten der Regalförderbänder 23 jeweils mit ihrer halbzylindrischen Wölbung um die vordere Umlenkrolle herum sichtbar. In der Aufsicht der Figur 1 ist das Regalförderband 23 nur als Rechteck zwischen den Regalwänden 22 zu erkennen.

In Figur 2 ist gut nachvollziehbar, dass durch die Bewegung des Regalförderbandes 23 in Längsrichtung des Regalfaches 21 die darauf lagernden Glasscheiben 1 aus dem Regalfach 21 heraus oder hinein bewegbar sind. Als Antrieb des jeweils zu aktivierenden Regalförderbandes 23 dient eine - in Figur 2 nicht extra gezeichnete - Kopplung mit dem Förderband des Horizontalförderers 4 auf dem Förderwagen 3.
In Figur 2 ist ein Förderwagen 3 an der rechten Seite des Regals 2 gezeichnet. Er ist im Unterschied zu Figur 1 spiegelbildlich aufgebaut, d.h. der Querantrieb 41 ist auf der anderen Seite des Horizontalförderers angeordnet. Das Arbeitsprinzip ist jedoch das gleiche. In Figur 2 ist gut zu erkennen, dass die senkrecht auf dem Horizontalförderer 4 stehende Glasscheibe 1 an ihrer linken und an ihrer rechten Seite durch je eine feststehende Wand am Umkippen gehindert wird. Dadurch ist ein reibungsloser Transfer der Glasscheibe 1 vom Horizontalförderer 4 in ein Regalfach 21 oder umgekehrt möglich.

### Bezugszeichenliste

| | |
|---|---|
| 1 | Glasscheibe |
| 2 | Regal, zur Aufnahme von Glasscheiben 1 |
| 21 | Regalfach im Regal 2 |
| 22 | Seitenwände eines Regalfaches 21 |
| 23 | Regalförderband, auf dem Boden eines Regalfaches 21 |
| 3 | Förderwagen, fährt parallel zur Regalfront |
| 31 | Schienen für Förderwagen 3 |
| 4 | Horizontalförderer, auf Förderwagen 3 angeordnet |
| 41 | Querantrieb, bewegt den Horizontalförderer 4 |

## Patentansprüche

1. Scheibensortierer zum Zwischenlagern und Sortieren von Glasscheiben 1 verschiedener Größe, bestehend aus
- einem Regal 2 mit mehreren Regalfächern 21 und
- einem oder mehreren Förderwagen 3, mittels denen
- jedes Regalfach 21 und
- wenigstens einer Belade- und Entladestelle erreichbar ist und
- auf denen wenigstens je ein Horizontalförderer 4 angeordnet ist und
- einer Steuerung,
- durch die die Bewegungen der Förderwagen 3 und ihrer Horizontalförderer 4 steuerbar sind und
- durch die jeder Glasscheibe 1 ein Regalfach 21 zuweisbar ist,
**dadurch gekennzeichnet, dass**
- von der Steuerung
- Abmessungssensoren zur Erfassung von Breite und Höhe der Glasscheiben 1 auswertbar sind und
- innerhalb jedes Regalfaches 21 die Tiefe vorgebbar ist, in die eine Glasscheibe 1 von einem Horizontalförderer 4 verfahrbar ist und
- in der Steuerung
- für jede Glasscheibe 1 im Regal 2 deren Breite und deren Höhe und das jeweilige Regalfach 21 und die jeweilige Position innerhalb dieses Regalfaches 21 speicherbar und abrufbar ist und
- für jedes bereits mit wenigstens einer Glasscheibe 1 belegte Regalfach 21 aus der Differenz zur gesamten Regaltiefe die noch freie Regaltiefe berechenbar ist und
- von der Steuerung einer Glasscheibe 1 mit gleicher oder geringerer Breite der noch freie Teil eines bereits teilweise belegten Regalfaches 21 zuweisbar ist.

2. Scheibensortierer nach Anspruch 1, **dadurch gekennzeichnet, dass** von der Steuerung die noch verfügbare Tiefe eines jeden Regalfaches 21 durch einen Tiefensensor auf dem Förderwagen 3 erfassbar ist.

3. Scheibensortierer nach Anspruch 1 oder 2, **dadurch gekennzeichnet, dass** von den Abmessungssensoren die Breite und/oder die Höhe jeder Glasscheibe 1 messtechnisch erfassbar ist.

4. Scheibensortierer nach Anspruch 1 oder 2, **dadurch gekennzeichnet, dass** von den Abmessungssensoren die Breite und die Höhe jeder Glasscheibe 1 erfassbar ist, indem sie ein auf jeder Glasscheibe 1 angebrachtes Informationsfeld, wie z.B. einen Barcode, welcher diese Informationen enthält, auslesen.

5. Scheibensortierer nach einem der vorhergehenden Ansprüche, **dadurch gekennzeichnet, dass** der Horizontalförderer 4 aus einem Förderband besteht,
- das parallel zu den Seitenwänden 22 des Regalfaches 21 verläuft und
- auf dem wenigstens eine Glasscheibe 1 abstellbar ist, und
- das über wenigstens zwei Umlenkrollen bewegbar ist und
- das mit je einem gleichartigen Regalförderband 23 auf der Ablagefläche eines jeden Regalfachs 21 mechanisch koppelbar ist, welches in Verlängerung des Horizontalförderers 4 verläuft oder das Regalförderband 23 einen eigenen Antrieb besitzt, der mit dem Antrieb des ersten Förderbandes regelungstechnisch koppelbar ist.

6. Scheibensortierer nach einem der vorhergehenden Ansprüche, **dadurch gekennzeichnet, dass** alle Glasscheiben 1, die zum Einbau in ein einziges Fenster vorgesehen sind,
- entweder ein oder mehrere Regalfächer 21 exklusiv belegen oder
- beliebig auf Regalfächer 21 verteilt sind, die auch Glasscheiben enthalten können, die anderen Fenstern zugeordnet sind.

7. Scheibensortierer nach einem der vorhergehenden Ansprüche, **dadurch gekennzeichnet, dass**
- der Horizontalförderer 4 durch einen Querantrieb 41 bewegbar ist, dessen Beschleunigung regelbar ist und
- die Steuerung
- für jede Glasscheibe 1 das Verhältnis von Höhe und Breite berechnet und
- für diesen Wert aus einer in der Steuerung gespeicherten Tabelle einen Grenzwert für die Beschleunigung entnimmt, bei dem die Glasscheibe mit Sicherheit noch auf dem Horizontalförderer stehen bleibt und
- die Beschleunigung des Querantriebes 41 auf diesen Wert begrenzt.

8. Scheibensortierer nach einem der vorhergehenden Ansprüche, **dadurch gekennzeichnet, dass** auf dem Horizontalförderer wenigstens eine Glasscheibe 1 fest einspannbar ist.

9. Scheibensortierer nach einem der vorhergehenden Ansprüche, **dadurch gekennzeichnet, dass**
- im Regal 2 wenigstens zwei Regalfächer 21 übereinander angeordnet sind und
- wenigstens ein Förderwagen 3 eine Hubeinrichtung zum Anheben der Glasscheiben 1 aufweist und
- in der Steuerung für jedes Regalfach 21
- die jeweilige Höhe des Innenraumes vom Regalfaches 21 und
- die jeweilige Höhe der Abstellfläche im Regalfach 21 in Bezug auf die Verfahrebene des Förderwagens 3 abspeicherbar ist.

10. Scheibensortierer nach Anspruch 9, **dadurch gekennzeichnet, dass** durch die Hubeinrichtung der Horizontalförderer 4 mitsamt den darauf befindlichen Glasscheiben 1 anhebbar ist.

11. Scheibensortierer nach den Ansprüchen 5 und 10, **dadurch gekennzeichnet, dass** das Förderband im Horizontalförderer 4 auf die Höhe des Regalförderbandes 23 des jeweiligen Regalfaches 21 anhebbar ist.

12. Verfahren zum Beladen eines Scheibensortierers nach den vorhergehenden Ansprüchen, **dadurch gekennzeichnet, dass**
- im ersten Schritt ein Förderwagen 3 zur Beladestation verfährt und dort mittels des Horizontalförderers 4 eine Glasscheibe 1 aufnimmt und die Länge und die Breite der Glasscheibe 1 erfasst wird und an die Steuerung übergeben wird und
- im zweiten Schritt die Steuerung dieser Glasscheibe 1 ein bestimmtes Regalfach 21 zuweist und
- im dritten Schritt der Förderwagen 3 durch Befehle von der Steuerung an seinen Fahrantrieb zu dem zugewiesenen Regalfach 21 gefahren wird, bis der Horizontalförderer 4 etwa mittig vor dem Regalfach 21 steht und
- im vierten Schritt der Horizontalförderer 4 die Glasscheibe 1 bis in die von der Steuerung vorgegebene Tiefe des Regalfaches 21 verfährt.

13. Verfahren nach Anspruch 6, **dadurch gekennzeichnet, dass** die Steuerung jede Glasscheibe 1
- vorrangig einem Regalfach 21 zuweist, in dem sich bereits wenigstens eine andere Glasscheibe 1 befindet, die demselben Fenster zugeordnet ist und
- falls das nicht möglich ist, die Glasscheibe 1 in ein leeres Fach platziert und
- falls auch das nicht möglich ist, die Glasscheibe 1 in ein anderes Regalfach 21 einordnet, in dem sich bereits eine Glasscheibe 1 befindet, die einem anderen Fenster zugeordnet ist.

14. Verfahren zum Zusammenstellen der Glasscheiben 1 für ein Fenster mit einem Scheibensortierer nach den vorhergehenden Ansprüchen, **dadurch gekennzeichnet, dass**
- für den Fall, dass sich alle benötigten Glasscheiben 1 in einem einzigen Regalfach 21 befinden, die Steuerung dorthin einen Förderwagen 4 verfährt, der dieses Regalfach 21 vollständig entleert und alle Glasscheiben 1 zur Abnahme verfährt und
- für den Fall, dass die benötigten Glasscheiben 1 in mehr als einem Regalfach 21 stehen, ein Förderwagen 3 diese Regalfächer 21 nacheinander anfährt, und
- entweder die Glasscheiben jeweils einzeln zur Abnahme fährt
- oder zumindest einige der Glasscheiben 1 sammelt und sie gemeinsam bis zur Abnahme fährt und
- für den Fall, dass vor den eigentlich benötigten Glasscheiben 1 andere Glasscheiben stehen, die einem anderen Fenster zugeordnet sind dieser oder ein anderer Förderwagen 3 zuerst diese Glasscheiben 1 in ein anderes Regalfach 21 umlagert und erst dann dieser oder ein anderer Förderwagen 3 die eigentlich gewünschten Glasscheiben 1 auflädt und zur Abnahme verbringt.

15. Verfahren zum manuellen Zusammenstellen der Glasscheiben 1 für ein Fenster aus dem Regal 2 eines Scheibensortierers nach den vorhergehenden Ansprüchen, **dadurch gekennzeichnet, dass** die Steuerung auf einem Display anzeigt, welche Glasscheibe 1 aus welchem Regalfach 21 als nächste zu entnehmen ist und nach der Quittierung dieser Meldung anzeigt, welche Glasscheibe 1 als nächste zu entnehmen ist und so fort, bis die Steuerung auf dem Display anzeigt, dass keine weitere Glasscheibe 1 mehr für dieses Fenster erforderlich ist.

## Claims

1. Pane sorting means for the intermediate storage and sorting of glass panes 1 of different sizes, comprising
- a shelf 2 comprising a plurality of shelf compartments 21 and
- one or more conveying trolleys 3, by means of which
- each shelf compartment 21 and
- at least one loading and unloading point can be reached and
- on which at least one horizontal conveyor 4 is disposed and
- an open-loop controller,
- by means of which the movements of the conveying trolleys 3 and their horizontal conveyors 4 can be controlled and
- by means of which a shelf compartment 21 can be assigned to each glass pane 1, **characterised in that**
- by the open-loop controller
- dimension sensors for registering the width and height of the glass panes 1 can be evaluated and
- within each shelf compartment 21, the depth can be set, by which one glass pane 1 can be traversed by a horizontal conveyor 4 and
- in the open-loop controller
- for each glass pane 1 in the shelf 2, the width and height thereof and the particular shelf compartment 21 and the position within this shelf compartment 21 can be stored and retrieved and
- for each shelf compartment 21 already containing at least one glass pane 1, the shelf depth that is still free can be calculated from the difference from the entire shelf depth and
- from the open-loop controller, that portion of an already partially occupied shelf compartment 21 that is still free can be assigned to a glass pane 1 with the same or lower width.

2. Pane sorting means according to claim 1, **characterised in that** the still-available depth of each shelf compartment 21 can be registered by the open-loop controller by means of a depth sensor on the conveying trolley 3.

3. Pane sorting means according to claim 1 or 2, **characterised in that** the width and/or the height of each glass pane 1 can be registered metrologically by the dimension sensors.

4. Pane sorting means according to claim 1 or 2, **characterised in that** the width and the height of each glass pane 1 can be registered by the dimension sensors **in that** they read an information field mounted on each glass pane 1, such as a barcode containing said information..

5. Pane sorting means according to one of the preceding claims, **characterised in that** the horizontal conveyor 4 consists of a conveyor belt,
- which travels parallel to the side walls 22 of the shelf compartment 21 and
- on which at least one glass pane 1 can be deposited, and
- which can be moved via at least two deflecting rollers and
- which can be mechanically coupled to a similar shelf conveyor belt 23 on the shelf area of each shelf compartment 21, which shelf conveyor belt runs in in an extension of the horizontal conveyor 4 or the shelf conveyor belt 23 possesses an own drive which, in terms of the control technology, can be coupled to the drive of the first conveyor belt.

6. Pane sorting means according to one of the preceding claims, **characterised in that** all glass panes 1 that are provided for installation in a single window
- either exclusively occupy one or more shelf compartments 21 or
- are arbitrarily distributed on shelf compartments 21, which may also contain glass panes that are assigned to other windows.

7. Pane sorting means according to one of the preceding claims, **characterised in that**
- the horizontal conveyor 4 can be moved by means of a transverse drive 41, the acceleration of which is controllable and
- the open-loop controller
- calculates the ratio of height and width for each glass pane 1 and
- for this value, from a table, which is stored in the open-loop controller, takes a limit value for the acceleration at which the glass pane is still sure to come to rest on the horizontal conveyor and
- limits the acceleration of the transverse drive 41 to this value.

8. Pane sorting means according to one of the preceding claims, **characterised in that** at least one glass pane 1 can be firmly clamped on the horizontal conveyor.

9. Pane sorting means according to one of the preceding claims, **characterised in that**
- in shelf 2, at least two shelf compartments 21 are disposed in stacked arrangement and
- at least one conveying trolley 3 has a lifting means for raising the glass panes 1 and
- in the open-loop controller for each shelf compartment 21
- the height in each case of the interior space of the shelf compartment 21 and
- the height in each case of the deposition surface in the shelf compartment 21 with respect to the traversing level of the conveying trolley 3 can be stored.

10. Pane sorting means according to claim 9, **characterised in that**, by means of the lifting device, the horizontal conveyor 4 together with the glass panes 1 located thereon can be raised.

11. Pane sorting means according to claims 5 and 10, **characterised in that** the conveyor belt in the horizontal conveyor 4 can be lifted to the height of the shelf conveyor belt 23 of the shelf compartment 21 in each case.

12. Method for charging a pane sorting means according to the preceding claims, **characterised in that**
- in the first step, a conveying trolley 3 travels to the charging station, where, by means of the horizontal conveyor 4, it picks up a glass pane 1, and the length and width of the glass pane 1 are registered and transmitted to the open-loop controller, and
- in the second step, the open-loop controller assigns a particular shelf compartment 21 to this glass pane 1, and
- In the third step, the conveying trolley 3 is traversed, by means of commands from the open-loop controller to its drive means, to the assigned shelf compartment 21 until the horizontal conveyor 4 stands approximately centrally in front of the shelf compartment 21 and
- in the fourth step, the horizontal conveyor 4 traverses the glass pane 1 to the depth of the shelf compartment 21 determined by the open-loop controller.

13. Method according to claim 6, **characterised in that** the open-loop controller assigns each glass pane 1.
- primarily to a shelf compartment 21 in which at least one other glass pane 1 that is assigned to the same window is already located and
- if that is not possible, places the glass pane 1 in an empty compartment
- if that is not possible either, sorts the glass pane 1 into a different compartment 21, in which a glass pane 1, which is assigned to a different window, is already located.

14. Method for gathering together the glass panes 1 for a window by means of a pane sorting means according to the preceding claims, **characterised in that**
- for the case in which all the glass panes 1 are located in a single shelf compartment 21, the open-loop controller traverses a conveying trolley 4 there, which completely empties this shelf compartment 21 and traverses all the glass panes 1 for removal and
- for the case in which the required glass panes 1 are disposed in more than one shelf compartment 21, a conveying trolley 3 travels to these shelf compartments 21 in turn, and
- either traverses the glass panes in each case individually for removal
- or collects at least some of the glass panes 1 and traverses them together until removal and
- in case other glass panes, which are assigned to a different window, are disposed in front of the glass panes 1 that are actually required, this or a different conveying trolley 3 first relocates these glass panes 1 into a different shelf compartment 21 and only then loads this or a different conveying trolley 3 with the glass panes 1 actually required, and transports them for removal.

15. Method for manual gathering together of the glass panes 1 for a window from the shelf 2 of a pane sorting means according to the preceding claims, **characterised in that** the open-loop controller indicates on a display which glass pane 1, from which shelf compartment 21, is to be removed next, and after acknowledgement of this message, which glass pane 1 is to be removed next and so forth, until the open-loop controller indicates on the display that no further glass pane 1 is required for this window.

## Revendications

1. Trieur de vitres destiné à l'entreposage intermédiaire et au tri de vitres en verre 1 de différentes tailles, consistant en
- une étagère 2 avec plusieurs compartiments d'étagère 21 et
- un ou plusieurs chariots de transport 3, au moyen desquels
■ chaque compartiment d'étagère 21 et
■ au moins un lieu de chargement et de déchargement peut être atteint et
■ sur chacun desquels est disposé au moins un convoyeur horizontal 4 et
- une commande,
■ grâce à laquelle il est possible de commander les mouvements du chariot de transport 3 et de leur convoyeur horizontal 4 et
■ qui permet d'attribuer un compartiment d'étagère 21 à chaque vitre en verre 1
**caractérisé par le fait**
- **que** la commande
■ peut évaluer les capteurs de dimensions destinés à saisir la largeur et la hauteur des vitres en verre 1,
■ la profondeur dans laquelle une vitre en verre 1 peut être amenée par un convoyeur horizontal 4 pouvant être donnée à l'avance à l'intérieur de chaque compartiment d'étagère 21 et
- dans la commande,
■ la largeur et la hauteur ainsi que le compartiment d'étagère 21 concerné et la position respective à l'intérieur de ce compartiment d'étagère 21 de chaque vitre en verre 1 dans l'étagère 2 peuvent être sauvegardés en mémoire et consultés,
■ la profondeur d'étagère encore libre pouvant être calculée à partir de la différence par rapport à la profondeur totale pour chaque compartiment d'étagère 21 déjà occupé par au moins une vitre en verre 1,
- une vitre en verre 1 ayant une largeur inférieure ou égale à la largeur encore libre pouvant être attribuée par la commande 1 à un compartiment d'étagère 21.

2. Trieur de vitres selon la revendication 1, **caractérisé par le fait que** la profondeur encore disponible de chaque compartiment d'étagère 21 peut être détectée par la commande au moyen d'un capteur de profondeur sur le chariot de transport 3.

3. Trieur de vitres selon la revendication 1 ou 2, **caractérisé par le fait que** la largeur et/ou la hauteur de chaque vitre en verre 1 peut être enregistrée, par des moyens de technique de mesure, par les détecteurs de dimensions.

4. Trieur de vitres selon la revendication 1 ou 2, **caractérisé par le fait que** la largeur et la hauteur de chaque vitre en verre 1 peut être enregistrée par les capteurs de dimensions par lecture d'un champ d'information posé sur chaque vitre en verre, comme par exemple un code-barres contenant ces informations.

5. Trieur de vitres selon une des revendications précédentes, **caractérisé par le fait que** le convoyeur horizontal 4 consiste en un tapis roulant
- qui suit un parcours parallèle aux murs latéraux 22 du compartiment d'étagère 21, et
- qui peut être déplacé par au moins deux rouleaux de renvoi et
- qui peut être couplé mécaniquement avec un tapis roulant 23 de même type sur la surface de déposition de chacun des compartiments d'étagère 21, qui court dans le prolongement du convoyeur horizontal 4 ou bien est tel que le tapis roulant d'étagère 23 possède son propre entraînement qui peut être couplé, en termes de technique de régulation, avec l'entraînement du premier tapis roulant.

6. Trieur de vitres selon une des revendications précédentes, **caractérisé par le fait que** toutes les vitres en verre 1, qui sont destinées à être montées dans une seule fenêtre,
- occupent exclusivement un ou plusieurs compartiments d'étagère 21 ou
- sont réparties à volonté sur des compartiments d'étagères 21 pouvant également contenir des vitres en verre correspondant à d'autres fenêtres.

7. Trieur de vitres selon une des revendications précédentes, **caractérisé par le fait**
- **que** le convoyeur horizontal 4 peut être déplacé par un entraînement transversal 41 dont l'accélération peut être régulée et que
- la commande
■ calcule le rapport de la hauteur et de la largeur pour chaque vitre en verre 1 et
■ récupère, dans la table enregistrée dans la commande, une valeur limite de l'accélération pour laquelle la vitre en verre reste sûrement sur le convoyeur horizontal,
■ l'accélération de l'entraînement transversal 41 étant limitée à cette valeur.

8. Trieur de vitres selon une des revendications précédentes, **caractérisé par le fait qu'**au moins une vitre en verre 1 peut être fixée solidement sur le convoyeur horizontal.

9. Trieur de vitres selon une des revendications précédentes, **caractérisé par le fait**
- **que** dans l'étagère 2 au moins deux compartiments d'étagère 21 sont disposés l'un au-dessus de l'autre et
- **qu'**au moins un chariot de transport 3 présente un dispositif de levage destiné à soulever les vitres en verre 1 et
- **que** la commande peut enregistrer, pour chaque compartiment d'étagère 21,
■ la hauteur respective de l'espace intérieur du compartiment d'étagère 21 et
■ la hauteur respective de la surface de déposition dans le compartiment d'étagère 21 par rapport au niveau de déplacement 3.

10. Trieur de vitres selon la revendication 9, **caractérisé par le fait que** le convoyeur horizontal 4 peut être soulevé par le dispositif de levage avec l'ensemble des vitres en verre qui se trouvent dessus.

11. Trieur de vitres selon les revendications 5 et 10, **caractérisé par le fait que** le tapis roulant dans le convoyeur horizontal 4 peut être soulevé à la hauteur du tapis roulant d'étagère 23 de chaque compartiment d'étagère 21.

12. Procédé destiné à charger un trieur de vitres selon les revendications précédentes, **caractérisé par le fait**
- **que** dans une première étape un chariot transporteur 3 se rend au poste de chargement et y récupère un vitre en verre 1 au moyen du convoyeur horizontal 4, y enregistre la longueur et la largeur de la vitre en verre 1 et transmet ces informations à la commande et
- **que** dans une deuxième étape la commande attribue cette vitre en verre 1 à un certain compartiment d'étagère 21 et
- **que** dans une troisième étape le chariot de transport 3 est amené, par les ordres que la commande donne à son entraînement de déplacement, au compartiment d'étagère 21 qui lui a été attribué, jusqu'à ce que le convoyeur horizontal se trouve à peu près de façon centrée devant le compartiment d'étagère 21 et
- **que** dans une quatrième étape le convoyeur horizontal 4 amène la vitre en verre 1 jusqu'à la profondeur prescrite du compartiment d'étagère 21.

13. Procédé selon la revendication 6, **caractérisé par le fait que** la commande
- attribue en priorité chaque vitre en verre 1 à un compartiment d'étagère 21 dans lequel se trouve déjà une autre vitre en verre 1 correspondant à la même fenêtre et
- place la vitre en verre 1 dans un compartiment vide si cela n'est pas possible et
- range la vitre en verre 1 dans un autre compartiment d'étagère 21 qui contient déjà une vitre en verre 1 correspondant à une autre fenêtre.

14. Procédé destiné à rassembler les vitres en verre 1 pour une fenêtre à l'aide d'un trieur de vitres selon les revendications précédentes, **caractérisé par le fait que**
- au cas où toutes les vitres en verre 1 dont on a besoin se trouvent dans un seul compartiment d'étagère 21, la commande y déplace un chariot de transport 4, qui vide complètement ce compartiment d'étagère 21 et déplace toutes les vitres en verre 1 pour réception et
- au cas où les vitres en verre 1 dont on a besoin se trouvent dans plus d'un compartiment 21, un chariot de transport 3 se rend à chacun de ces compartiments d'étagère 21 les uns après les autres et
■ déplace les vitres en verre une par une jusqu'à la réception
■ ou bien rassemble au moins certaines des vitres en verre 1 et les amène ensemble jusqu'à la réception et
- dans le cas où d'autres vitres en verre correspondant à une autre fenêtre se trouvent avant les vitres en verre 1 dont on a effectivement besoin, ce chariot ou bien un autre chariot de transport 3 déplace d'abord ces vitres en verre 1 dans un autre compartiment d'étagère 21, ce chariot de transport 3 ou un autre ne chargeant les vitres en verre 1 effectivement souhaitées et les amenant à la réception qu'après cela.

15. Procédé destiné à rassembler manuellement les vitres en verre 1 pour une fenêtre à partir d'une étagère 2 d'un trieur de vitres selon les revendications précédentes, **caractérisé par le fait que** la commande affiche sur un écran la vitre en verre 1 qui doit être prélevée en premier d'un compartiment d'étagère 21 donné, et qui affiche, après acquittement de ce message, la vitre en verre 1 qui doit être prélevée ensuite et ainsi de suite jusqu'à ce que la commande affiche à l'écran qu'aucune autre vitre en verre 1 n'est plus nécessaire pour cette fenêtre.
